# EUROPEAN PATENT APPLICATION

(11) **EP 4 455 221 A1**
(43) Date of publication of application: **30.10.2024**
(21) Application number: 22911410.3
(22) Date of filing: 23.12.2022
(51) Int. Cl.: C08L 77/06, C08J 5/00, C08K 3/04

(54) **RESIN COMPOSITION, MOLDED BODY, AND METHOD FOR PRODUCING RESIN COMPOSITION**

(30) Priority: 23.12.2021 JP 2021209935
(71) Applicant: Sumitomo Chemical Company, Limited, Tokyo 103-6020 (JP)
(72) Inventor: SOMA Hidenori, Utsunomiya-shi, Tochigi 329-1105 (JP); KATAMI NUMAKAWA Tatsuya, Tsukuba-shi, Ibaraki 300-3294 (JP)
(74) Representative: Vossius & Partner Patentanwälte Rechtsanwälte mbB
(86) International application number: PCT/JP2022/047670
(87) International publication number: WO 2023/120709

(57) **Abstract**

The present invention relates to a resin composition containing a semi-aromatic polyamide and acetylene black.

## Description

### Technical Field

The present invention relates to a resin composition, a molded body, and a method for producing a resin composition.

Priority is claimed on Japanese Patent Application No. 2021-209935, filed December 23, 2021, the content of which is incorporated herein by reference.

### Background Art

Polyamides are known as materials that exhibit excellent abrasion resistance and strength, and are widely used as molding materials in all manner of components and the like.

For example, Patent Document 1 discloses a thermoplastic molding material containing specific mass % amounts of a polyamide as a component A, a highly branched or hyperbranched polyethyleneimine having functional groups that can react with the polyamide as a component B, and a conductive carbon filler selected from among carbon nanotubes, graphene, carbon black, graphite, and mixtures thereof as a component C.

In this manner, a carbon black has sometimes been added to a composition containing a polyamide to improve the conductivity of the composition.

### Citation List

### Patent Document

Patent Document 1
JP 2104-506607 A

### Summary of Invention

### Problems to be solved by Invention

However, molded bodies obtained from resin compositions containing a polyamide still have room for improvement in terms of heat resistance as indicated by the temperature of deflection under load and the high-temperature flexural strength.

The present invention has been developed to address the problems described above, and has the objects of providing a resin composition which contains a polyamide and is able to produce a molded body having improved heat resistance, and a molded body of the resin composition.

### Means to Solve the Problems

As a result of intensive research to solve the above problems, the inventors of the present invention discovered that in a resin composition containing a combination of a semi-aromatic polyamide as the polyamide and acetylene black as the carbon black, the heat resistance of the resulting molded body could be improved compared with resin compositions containing a semi-aromatic polyamide but containing no acetylene black, and they were therefore able to complete the present invention.

In other words, the present invention includes the following aspects.

<1> A resin composition containing a semi-aromatic polyamide and acetylene black.
<2> The resin composition according to <1>, wherein the amount of the acetylene black is 0.5 parts by mass or more but 20.0 parts by mass or less per 100 parts by mass of the semi-aromatic polyamide.
<3> The resin composition according to <1> or <2>, wherein the semi-aromatic polyamide has a structural unit represented by general formula (1) shown below. 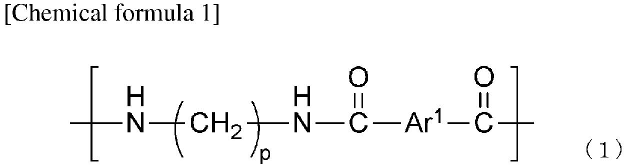 [In formula (1), Ar¹ represents a phenylene group or a naphthylene group, wherein the plurality of Ar¹ groups may be the same or different from each other, and p represents an integer of 6 to 11.]
<4> The resin composition according to <3>, wherein the semi-aromatic polyamide has a structural unit of the formula (1) in which Ar¹ represents a 1 ,4-phenylene group and p is 10.
<5> The resin composition according to any one of <1> to <4>, wherein when a molded body of length 80 mm, width 10 mm and thickness 4 mm, molded using an injection molding machine using the resin composition as a molding material, under molding conditions including a molding temperature of 330°C, a die temperature of 120°C and an injection time of 2 seconds, is used as a test specimen and tested in accordance with ISO 75, the temperature of deflection under load for the test specimen measured under a load of 1.80 MPa, a span between supports of 64 mm, a rate of temperature increase of 2°C/minute, and a prescribed deflection amount of 0.32 mm is 160°C or higher.
<6> The resin composition according to any one of <1> to <5>, wherein the amount of the semi-aromatic polyamide relative to 100% by mass of the total mass of the resin composition is 50% by mass or more.
<7> A molded body molded from the resin composition according to any one of <1> to <6>.
<8> A method for producing the resin composition according to any one of <1> to <6>, the method including mixing the semi-aromatic polyamide and the acetylene black.
<9> The method for producing a resin composition according to <8>, wherein the blend amount of the acetylene black is 1.0 parts by mass or more but 20.0 parts by mass or less per 100 parts by mass of the semi-aromatic polyamide.

### Effects of Invention

The present invention is able to provide a resin composition which contains a semi-aromatic polyamide and is able to produce a molded body having improved heat resistance, and a molded body of the resin composition.

### Description of Embodiments

Embodiments of the resin composition, the molded body, and the method for producing a resin composition according to the present invention are described below.

A molded body molded from the resin composition according to an embodiment is sometimes referred to as a "molded body of the resin composition".

### <<Resin Composition>>

The resin composition of an embodiment contains a semi-aromatic polyamide (hereinafter also referred to as "the polyamide") and acetylene black.

The molded body of the resin composition of an embodiment containing the semi-aromatic polyamide and acetylene black has improved heat resistance, as indicated by the temperature of deflection under load and the high-temperature flexural strength, compared with a molded body of a resin composition that does not contain the acetylene black.

Further, the molded body of the resin composition of an embodiment containing the semi-aromatic polyamide and acetylene black also has an improved flexural modulus compared with that of a molded body of a resin composition that does not contain the acetylene black.

As illustrated in Examples described below, these improvements in the heat resistance and the flexural modulus could not be confirmed when the semi-aromatic polyamide is replaced with an aliphatic polyamide.

Further, these improvements in the heat resistance and the flexural modulus could not be confirmed when the acetylene black was replace with a more typical furnace black.

Accordingly, by employing the specific combination of a semi-aromatic polyamide as the polyamide and acetylene black as the carbon black, the heat resistance and flexural modulus of molded bodies of the resin composition can be improved.

The resin composition of an embodiment can be obtained by blending the semi-aromatic polyamide, the acetylene black, and any other optional component described above that may be used as necessary, such that the total amount (% by mass) of all these components in the aromatic polysulfone composition does not exceed 100% by mass of the total mass of the resin composition of the embodiment.

The semi-aromatic polyamide and the acetylene black incorporated in the resin composition of an embodiment of the present invention are described below. Further, various other components which may also be included in the resin composition of the embodiment if necessary are also described below.

The resin composition of an embodiment may also include the semi-aromatic polyamide and the acetylene black in the form of a reaction product thereof.

The resin composition of an embodiment may also contain a modified polyolefin, which may also be included in the form of a reaction product of the semi-aromatic polyamide and the modified polyolefin, or a reaction product of the acetylene black and the modified polyolefin.

### <Semi-Aromatic Polyamide>

The semi-aromatic polyamide included in the resin composition of an embodiment of the present invention can be obtained as the polymer of an aliphatic diamine and an aromatic dicarboxylic acid.

The aliphatic diamine is preferably an aliphatic diamine of 6 to 11 carbon atoms. Examples of this aliphatic diamine of 6 to 11 carbon atoms include 1,6-hexanediamine, 1,7-heptanediamine, 1,8-octanediamine, 1,9-nonanediamine, 1,10-decanediamine, and 1,11-undecanediamine. One of these compounds may be used alone, or a combination of two or more compounds may be used.

Examples of the aromatic dicarboxylic acid include terephthalic acid, phthalic acid, isophthalic acid, and naphthalenedicarboxylic acid. One of these compounds may be used alone, or a combination of two or more compounds may be used.

The polyamide according to an embodiment is preferably a semi-aromatic polyamide having a structural unit represented by general formula (1) shown below.

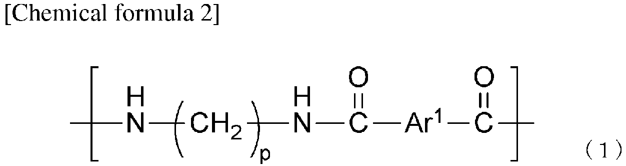

[In formula (1), Ar¹ represents a phenylene group or a naphthylene group, wherein the plurality of Ar¹ groups may be the same or different from each other. And, p represents an integer of 6 to 11, wherein the plurality of p may be the same or different from each other.]

From the viewpoint of achieving molded bodies having superior heat resistance and flexural modulus, it is more preferable that in general formula (1) Ar¹ represents a phenylene group or naphthylene group, wherein the plurality of Ar¹ groups may be the same or different from each other, and p represents either 9 or 10.

From the viewpoint of achieving molded bodies having particularly superior heat resistance and flexural modulus, it is even more preferable that in general formula (1) Ar¹ represents a phenylene group or naphthylene group, wherein the plurality of Ar¹ groups may be the same or different from each other, and p represents 10.

Examples of the phenylene group for Ar¹ include a 1,4-phenylene group or a 1,3-phenylene group. Examples of the naphthylene group for Ar¹ include a 2,6-naphthylene group or a 2,7-naphthylene group.

In the above general formula (1), it is preferable that Ar¹ represents a 1,4-phenylene group, and p represents an integer of 6 to 11.

In the above general formula (1), it is more preferable that Ar¹ represents a 1,4-phenylene group, and p represents 9 or 10.

In the above general formula (1), it is particularly preferable that Ar¹ represents a 1,4-phenylene group, and p represents 10.

In the polyamide, the amount of the structural unit represented by general formula (1), relative to the total (100%) of all the structural units within the polyamide, is preferably 40% or more, more preferably 80% or more, and even more preferably 90% or more.

In the polyamide, the amount of the structural unit represented by general formula (1) in which Ar¹ represents a phenylene group or naphthylene group, wherein the plurality of Ar¹ groups may be the same or different from each other, and p represents either 9 or 10, relative to the total (100%) of all of the structural units within the polyamide, is preferably 40% or more, more preferably 80% or more, and even more preferably 90% or more.

In the polyamide, the amount of the structural unit represented by general formula (1) in which Ar¹ represents a 1,4-phenylene group and p represents 9 or 10, relative to the total (100%) of all of the structural units within the polyamide, is preferably 40% or more, more preferably 80% or more, and even more preferably 90% or more.

In the polyamide, the amount of the structural unit represented by general formula (1) in which Ar¹ represents a 1,4-phenylene group and p represents 10, relative to the total (100%) of all of the structural units within the polyamide, is preferably 40% or more, more preferably 80% or more, and even more preferably 90% or more.

The melt mass flow rate (MFR) of the semi-aromatic polyamide may be 100 g/10min or less, 80 g/10min or less, or 60 g/lOmin or less. The MFR of the semi-aromatic polyamide may be 5 g/lOmin or more, 25 g/lOmin or more, or 45 g/lOmin or more. In one example, the MFR of the semi-aromatic polyamide may be 5 g/10min or more but 100 g/lOmin or less, 25 g/10min or more but 80 g/10min or less, or 45 g/10min or more but 60 g/lOmin or less.

The MFR of the semi-aromatic polyamide can be determined using the measurement method described below.

### [MFR of Polyamide]

Using an MFR measurement apparatus (for example, Melt Indexer G-01, manufactured by Toyo Seiki Seisaku-sho, Ltd.), the MFR of a polyamide is measured in accordance with JIS K7210, under conditions including a test temperature of 320°C and a load of 2,160 g.

The MFR of the semi-aromatic polyamide can be controlled by appropriate adjustment of conditions related to the reaction efficiency of the polymerization reaction such as the raw material monomers, the catalyst and the reaction time.

In the resin composition of an embodiment, the amount of the semi-aromatic polyamide relative to the total mass (100% by mass) of the resin composition may be 50% by mass or more, 50% by mass or more but 99.5% by mass or less, 70% by mass or more but 98.5% by mass or less, 80% by mass or more but 97% by mass or less, or 80% by mass or more but 95% by mass or less.

However, in the resin composition, the amount of the acetylene black is 0.5 parts by mass or more but 20.0 parts by mass or less per 100 parts by mass of the semi-aromatic polyamide.

### <Acetylene Black>

The resin composition of an embodiment contains acetylene black. Acetylene black is a carbon black obtained by the thermal decomposition (self-combustion decomposition) of acetylene.

The mean particle size of the primary particles of the acetylene black may be, for example, 20 nm or more but 50 nm or less, or 30 nm or more but 40 nm or less.

The primary particle size can be determined using the method described on page 114 of the Carbon Black Yearbook No. 48 (1998) published by the Carbon Black Association.

Specifically, using a transmission electron microscope, the acetylene black is inspected at a magnification of 20,000×, the diameters of 1,000 randomly selected acetylene black particles are measured, and the primary particle size is then calculated as the arithmetic mean of those diameters.

The specific surface area of the acetylene black may be, for example, 30 m²/g or more but 100 m²/g or less, or 50 m²/g or more but 80 m²/g or less.

The specific surface area of the acetylene black refers to the nitrogen adsorption specific surface area. Measurement of this nitrogen adsorption specific surface area is conducted by first removing any gas adhered to the sample surface, subsequently adsorbing nitrogen to the sample at liquid nitrogen temperature, and then calculating the specific surface area from the amount of adsorbed nitrogen.

Specifically, using a BET specific surface area measurement device (for example, AccuSorb 2100E, manufactured by Micromeritics Instrument Corporation), nitrogen gas is adsorbed to the sample at liquid nitrogen temperature, the amount of adsorption is measured, and the specific surface area is calculated using the BET method (Brunauer-Emmett-Teller method) in accordance with JIS K6217-2: 2001.

The DBP (dibutyl phthalate) oil absorption for the acetylene black may be, for example, 100 mL/100g or more, 100 mL/100g or more but 500 mL/100g or less, 150 mL/100g or more but 400 mL/100g or less, or 200 mL/100g or more but 300 mL/100g or less.

The DBP oil absorption is a value that is determined as an indicator reflecting the degree of aggregation of the carbon black, and it is thought that an acetylene black having a DBP oil absorption within the above numerical range effectively reflects the acetylene black characteristics described above, and yields a superior improvement in the heat resistance.

The DBP oil absorption can be measured in accordance with JIS K6217-4.

In the resin composition of an embodiment, the amount of the acetylene black per 100 parts by mass of the semi-aromatic polyamide may be 0.5 parts by mass or more, 1.0 parts by mass or more, 2.0 parts by mass or more, or 3.0 parts by mass or more.

By including the acetylene black in a proportion that is at least as high as the above lower limit, the action of the composition in improving the heat resistance of a molded body of the resin composition manifests more effectively.

In the resin composition of an embodiment, the amount of the acetylene black per 100 parts by mass of the semi-aromatic polyamide may be 20.0 parts by mass, 19.0 parts by mass or less, 18.0 parts by mass or less.

By including the acetylene black in a proportion that is not more than the above upper limit, the moldability of the obtained resin composition improves.

In the resin composition of an embodiment, examples of the above numerical range for the amount of the acetylene black per 100 parts by mass of the semi-aromatic polyamide may be 0.5 parts by mass or more but 20.0 parts by mass or less, 1.0 parts by mass or more but 19.0 parts by mass or less, 1.0 parts by mass or more but 19.0 parts by mass or less, 2.0 parts by mass or more but 19.0 parts by mass or less, or 3.0 parts by mass or more but 18.0 parts by mass or less.

The resin composition of an embodiment may also include a carbon black other than acetylene black, but the proportion of acetylene black relative to the total mass (100% by mass) of all carbon black within the resin composition may be 50% by mass or more, 80% by mass or more, or 95% by mass or more, and may also be 100% by mass.

### <Optional Components>

### (Modified Polyolefin)

The resin composition of an embodiment may, if necessary, also contain an added modified polyolefin.

Although there are no particular limitations on the polyolefin in the modified polyolefin, a thermoplastic elastomer is preferred. Examples of the modified polyolefin include copolymers of monomers including ethylene and/or propylene and α-olefins, and ethylene-α-olefin copolymers are preferred. The α-olefin is preferably an α-olefin of 4 to 20 carbon atoms, and more preferably an α-olefin of 4 to 10 carbon atoms, and include 1-butene, 1-pentene, 1-hexene, 1-octene, and 1-decene.

The modified polyolefin is preferably an acid-modified polyolefin.

The modified polyolefin may have functional groups within the molecule produced by acid modification, such as carboxyl groups, carboxylic acid anhydride groups, ester groups, carboxylic acid metal salt groups, carboxylic acid imide groups or carboxylic acid amide groups. As a result of having the types of functional groups exemplified above, the modified polyolefin exhibits enhanced compatibility with the semi-aromatic polyamide, enabling mechanical characteristics such as the fracture toughness to be improved.

The acid modification mentioned above preferably refers to modification with a carboxylic acid or an anhydride thereof. The carboxylic acid may be a saturated carboxylic acid or an unsaturated carboxylic acid, but an unsaturated dicarboxylic acid is preferred. Examples of the carboxylic acid include maleic acid, fumaric acid, succinic acid, phthalic acid, acrylic acid and methacrylic acid, and modification with maleic acid or the anhydride thereof is particularly preferred.

By using a modified polyolefin, and preferably an acid-modified polyolefin, the fracture toughness of molded bodies of the resin composition can be improved.

In the resin composition of an embodiment, the proportion of the modified polyolefin relative to the total mass (100% by mass) of the resin composition may be 15% by mass, 0.1% by mass or more but 15% by mass or less, 1.0% by mass or more but 10% by mass or less, or 2% by mass or more but 5% by mass or less.

In the resin composition of an embodiment, the amount of the modified polyolefin added, per 100 parts by mass of the semi-aromatic polyamide, may be 0.1 parts by mass or more but 15 parts by mass or less, 1.0 parts by mass or more but 15 parts by mass or less, 1.0 parts by mass or more but 10 parts by mass or less, or 2 parts by mass or more but 5 parts by mass or less.

In another aspect, from the viewpoint of enabling easy improvement in the heat resistance of molded bodies of the resin composition, the proportion of the modified polyolefin relative to the total mass (100% by mass) of the resin composition may be 15% by mass or less, or 10% by mass or less, or 5% by mass or less, and the resin composition of an embodiment may contain essentially no modified polyolefin nor reaction products thereof, meaning the amount of the modified polyolefin and reaction products thereof may be 0% by mass.

The structure of the modified polyolefin may be either a linear chain or a branched chain.

The endothermic peak for the modified polyolefin, measured by DSC (differential scanning calorimetry) using a differential scanning calorimeter (for example, DSC-60 Plus, manufactured by Shimadzu Corporation) at a cooling rate of 10°C/minute is preferably 30°C or higher, more preferably 30°C or higher but 45°C or less, and even more preferably 35°C or higher but 42°C or less.

Here, the "endothermic peak measured by DSC (differential scanning calorimetry) at a cooling rate of 10°C/minute" means the temperature at the apex position of the endothermic peak.

### (Other Components)

The resin composition of an embodiment of the present invention may also contain other components that do not correspond with any of the semi-aromatic polyamide, the acetylene black, the modified polyolefin, or reaction products of these components, provided these other components do not impair the effects of the present invention.

Examples of these other components include fillers, additives, and resins that do not correspond with the semi-aromatic polyamide or the modified polyolefin (hereinafter also referred to as "other resins").

One of these other components may be used alone, or a combination of two or more such components may be used.

The fillers may be fibrous fillers or granular fillers. Further, the fillers may be inorganic fillers or organic fillers.

Examples of the additives include stabilizers, release agents, antioxidants, thermal stabilizers, ultraviolet absorbers, antistatic agents, surfactants, flame retardants, and colorants.

Examples of the other resins include thermoplastic resins such as polyesters, polyphenylene sulfide, polyetherketones, polycarbonates, polyphenylene ethers, polyetherimides, and fluororesins; and thermosetting resins such as phenol resins, epoxy resins, polyimide resins, and cyanate resins.

In the resin composition of an embodiment, the proportion of the total mass of the semi-aromatic polyamide and the acetylene black relative to the total mass (100% by mass) of the resin composition of the embodiment may be, for example, 80% by mass or more but 100% by mass or less, or 90% by mass or more but 100% by mass or less, and may be 100% by mass.

In one example of the resin composition of an embodiment, relative to the total mass (100% by mass) of the resin composition of the embodiment:
it is preferable that the proportion of the semi-aromatic polyamide is 50% by mass or more but 99.5% by mass or less, and the proportion of the acetylene black is 0.5% by mass or more but 18% by mass or less,
it is more preferable that the proportion of the semi-aromatic polyamide is 70% by mass or more but 98.5% by mass or less, and the proportion of the acetylene black is 0.7% by mass or more but 17% by mass or less, and
it is even more preferable that the proportion of the semi-aromatic polyamide is 80% by mass or more but 97% by mass or less, and the proportion of the acetylene black is 3.0% by mass or more but 15% by mass or less.

However, in the resin composition, the amount of the acetylene black is within the range of 0.5 parts by mass or more but 20.0 parts by mass or less per 100 parts by mass of the semi-aromatic polyamide.

In another example of the resin composition of an embodiment, relative to the total mass (100% by mass) of the resin composition of the embodiment:
it is preferable that the proportion of the semi-aromatic polyamide is 50% by mass or more but 99.5% by mass or less, the proportion of the acetylene black is 0.5% by mass or more but 18% by mass or less, and the proportion of the modified polyolefin is 0% by mass or more but 15% by mass or less,
it is more preferable that the proportion of the semi-aromatic polyamide is 70% by mass or more but 98.5% by mass or less, the proportion of the acetylene black is 0.7% by mass or more but 17% by mass or less, and the proportion of the modified polyolefin is 0.1% by mass or more but 15% by mass or less, and
it is even more preferable that the proportion of the semi-aromatic polyamide is 80% by mass or more but 95% by mass or less, the proportion of the acetylene black is 3.0% by mass or more but 15% by mass or less, and the proportion of the modified polyolefin is 2% by mass or more but 3% by mass or less,
However, in the resin composition, the amount of the acetylene black is within the range of 0.5 parts by mass or more but 20.0 parts by mass or less per 100 parts by mass of the semi-aromatic polyamide.

By using the resin composition of an embodiment described above, and including the semi-aromatic polyamide and the acetylene black, the heat resistance of molded bodies of the resin composition can be improved.

The heat resistance of the resin composition can be evaluated, for example, using the temperature of deflection under load measured for a test specimen described below as an indicator. A higher temperature of deflection under load can be adjudged as meaning more favorable heat resistance.

### [Temperature of Deflection Under Load]

Using the resin composition that represents the measurement target as a molding material, a test specimen is obtained using an injection molding machine (for example, a hydraulic horizontal molding machine, model PS40E5ASE, manufactured by Nissei Plastic Industrial Co., Ltd.), under injection conditions including a molding temperature of 330°C, a die temperature of 120°C, an injection pressure of 100 MPa, an injection time of 2 seconds, and a cooling time of 20 seconds. The test specimen is a test specimen of length 80 mm, width 10 mm and thickness 4 mm prescribed in ISO 316. The temperature of deflection under load for the test specimen is measured in accordance with ISO 75, under conditions including a load of 1.80 MPa, a span between supports of 64 mm, a rate of temperature increase of 2°C/minute, and a prescribed deflection amount of 0.32 mm.

For the resin composition of an embodiment, the temperature of deflection under load measured using the test specimen described above may be 160°C or higher, 160°C or higher but 200°C or less, 170°C or higher but 195°C or less, or 180°C or higher but 190°C or less.

The heat resistance of the resin composition can also be evaluated, for example, using the high-temperature flexural strength measured for a test specimen described below as an indicator. A higher value for this high-temperature flexural strength can be adjudged as meaning more favorable heat resistance.

### [Bending Test (High-Temperature Flexural Strength)]

Using the resin composition that represents the measurement target as a molding material, a test specimen is obtained using an injection molding machine (for example, hydraulic horizontal molding machine, model PS40E5ASE, manufactured by Nissei Plastic Industrial Co., Ltd.), under injection conditions including a molding temperature of 330°C, a die temperature of 120°C, an injection pressure of 100 MPa, an injection time of 2 seconds, and a cooling time of 20 seconds. The test specimen is a test specimen of length 80 mm, width 10 mm and thickness 4 mm prescribed in ISO 316. The high-temperature flexural strength of the test specimen is measured in accordance with ISO 178/1A using a universal testing machine (for example, 68TM-50, manufactured by Instron Inc.) set to a temperature of 120°C, under conditions including a span between supports of 64 mm, and a test speed of 2 mm/minute.

For the resin composition of an embodiment, the high-temperature flexural strength measured using the test specimen described above may be, for example, 45 MPa or more, 45 MPa or more but 80 MPa or less, or 50 MPa or more but 70 MPa or less.

Further, by using the resin composition of an embodiment described above, and including the semi-aromatic polyamide and the acetylene black, the flexural modulus of molded bodies of the resin composition can be improved.

The flexural modulus of the resin composition can be evaluated, for example, using the flexural modulus measured for a test specimen described below as an indicator. A higher value for this flexural modulus can be adjudged as meaning a more favorable flexural modulus.

### [Bending Test (Flexural Modulus)]

Using the resin composition that represents the measurement target as a molding material, a test specimen is obtained using an injection molding machine (for example, hydraulic horizontal molding machine, model PS40E5ASE, manufactured by Nissei Plastic Industrial Co., Ltd.), under injection conditions including a molding temperature of 330°C, a die temperature of 120°C, an injection pressure of 100 MPa, an injection time of 2 seconds, and a cooling time of 20 seconds. The test specimen is a test specimen of length 80 mm, width 10 mm and thickness 4 mm prescribed in ISO 316. The flexural modulus is measured in accordance with ISO 178/1A, under conditions including an atmospheric temperature of 23°C, a span between supports of 64 mm, and a test speed of 2 mm/minute.

For the resin composition of an embodiment, the flexural modulus measured using the test specimen described above may be, for example, 3,000 MPa or more, 3,000 MPa or more but 4,000 MPa or less, or 3,100 MPa or more but 3,800 MPa or less.

Conventionally, aliphatic polyamides have been more typically used as the polyamide, but aliphatic polyamides tend to exhibit high water absorption, and cam sometimes suffer from inferior dimensional stability.

On the other hand, the semi-aromatic polyamide included in the resin composition of an embodiment exhibits lower water absorption than an aliphatic polyamide, and the molded bodies of the resin composition of the embodiment have excellent dimensional stability.

Details regarding the reasons that molded bodies of the resin composition having acetylene black added to a semi-aromatic polyamide exhibit improved heat resistance (temperature of deflection under load and high-temperature flexural strength) and flexural modulus are not entirely clear, but the reasons are thought to include the following.

Acetylene black is produced by a thermal decomposition method using acetylene gas as the starting raw material, and is generated by the thermal decomposition reaction represented by: C₂H₂ → 2C+Hz. Accordingly, a high-purity carbon black with superior crystallinity and few impurities can be obtained.

On the other hand, furnace black, which is produced by incomplete combustion using a furnace method, is widely used as a general-purpose carbon black that does not correspond with acetylene black. Furnace black is used, for example, as a conductive filler or as coloring carbon (black pigment).

For example, an oil furnace-type furnace black is produced using a petroleum-based hydrocarbon containing a multitude of different hydrocarbons as the starting raw material, and is generated, for example, by a reaction represented by: CₓH_{y}+O₂+H₂O → C+H₂+CO, but incomplete combustion occurs during the carbon production process, meaning impurities other than carbon are also produced as by-products.

Further, Ketjen black, which can be used favorably as a conductive material, is also produced by a furnace method.

Compared with other carbon blacks such as furnace black, acetylene black is known to form longer agglomerates, and it is thought that this characteristic dispersive state may contribute to improvements in the heat resistance and the flexural modulus.

Furthermore, compared with other carbon blacks, acetylene black is known to have more surface functional groups such as hydroxyl groups and carboxyl groups, and it is thought that interactions between these surface functional groups and the semi-aromatic polyamide may also contribute to improvements in the heat resistance and the flexural modulus. Accordingly, it is surmised that this combination of the semi-aromatic polyamide and acetylene black enables improvements in the heat resistance and the flexural modulus to be achieved.

The resin composition of the embodiment described above contains the semi-aromatic polyamide and acetylene black, and is therefore an extremely useful resin composition capable of producing molded bodies that combine high levels of heat resistance, flexural modulus and dimensional stability.

### <<Method for Producing Resin Composition>>

The method for producing a resin composition of an embodiment includes a step of mixing the semi-aromatic polyamide described above and the acetylene black described above.

By using the method for producing a resin composition of this embodiment, the resin composition of the embodiment described above can be produced.

The resin composition of an embodiment can be obtained by mixing the semi-aromatic polyamide and acetylene black described above, and any other optional components that may be used as necessary, either in a single batch or in a suitable sequence.

The mixing is preferably a melt kneading process. The aromatic polysulfone composition of an embodiment can be provided in a pelletized form by using, for example, an extruder to conduct melt kneading of the semi-aromatic polyamide, the acetylene black, and any other optional components that may be used as necessary.

Examples of the semi-aromatic polyamide, the acetylene black, and the other components used in the method for producing a resin composition are as described above in the section entitled <<Resin Composition>>.

The blend proportions of the semi-aromatic polyamide, the acetylene black, and the other components used in the method for producing a resin composition are the same as the proportions described above for each component in the section entitled <<Resin Composition>>.

For example, one example of the method for producing a resin composition of an embodiment is a method for producing a resin composition that includes mixing the semi-aromatic polyamide described above and the acetylene black described above, wherein the blend amount of the acetylene black is 1.0 parts by mass or more but 20.0 parts by mass or less per 100 parts by mass of the semi-aromatic polyamide.

The resin composition obtained in this manner, and particularly pellets of the resin composition, can be used favorably as a molding material for the molded body described below.

The resin composition of an embodiment includes both the state prior to curing and the state after curing. The cured resin composition (cured product of the resin composition) can be used to form a molded body of an embodiment.

### «Molded Body»

A molded body of one embodiment of the present invention is molded from the resin composition of an embodiment described above.

Examples of the molded body of an embodiment include molded bodies containing the resin composition of an embodiment.

Other examples of the molded body of an embodiment include molded bodies consisting of the resin composition of an embodiment.

There are no particular limitations on the molding method used for forming the molded body from the resin composition, but molten molding is preferred, and examples include extrusion molding, T-die molding, blow molding, and injection molding. The molded body can be formed by selecting a molding method in accordance with the shape and the like of the molded body, and then molding the resin composition into a molded body of the desired shape.

The molded body of this embodiment can be applied to any application in which resin compositions are typically applied.

Examples of the molded body of this embodiment include electrical and electronic componentry such as connectors, sockets, relay components, coil bobbins, optical pickups, oscillators, printed wiring boards, circuit boards, semiconductor packages, and computer-related components; componentry related to semiconductor production processes such as IC trays and wafer carriers; componentry for household electrical products such as VTRs, televisions, irons, air conditioners, stereos, vacuum cleaners, refrigerators, rice cookers, and lighting fixtures; lighting fixture componentry such as lamp reflectors and lamp holders; componentry for audio products such as compact discs, Laser Discs (a registered trademark), and speakers; componentry for communication equipment such as optical fiber ferrules, telephone components, facsimile components, and modems; componentry for copiers and printers such as separation claws and heater holders; machinery componentry such as impellers, fan gears, gears, bearings, and motor components and casings; vehicle componentry such as vehicle mechanism components, engine components, engine room components, electrical components, and interior components; cooking equipment such as microwave cooking pots and heat-resistant tableware; engineering and construction materials, including insulation and soundproofing materials such as flooring materials and wall materials, support materials such as beams and posts, and building materials such as roofing materials; componentry for aircraft, spacecraft and space equipment; radiation facility componentry such as nuclear reactors, as well as marine facility materials, cleaning equipment, optical equipment components, valves, pipes, nozzles, filters, membranes, medical equipment components, medical treatment materials, sensor components, sanitary products, sporting goods, leisure goods, and cable ties.

### Examples

The present invention is described below in further detail using a series of Examples, but the present invention is not limited to the following Examples.

### <<Measurements>>

### [Bending Test]

Using the resin compositions obtained in Examples, Reference Example and Comparative Examples as molding materials, test specimens were obtained using an injection molding machine (hydraulic horizontal molding machine, model PS40E5ASE, manufactured by Nissei Plastic Industrial Co., Ltd.), under injection conditions including a molding temperature of 330°C, a die temperature of 120°C, an injection pressure of 100 MPa, an injection time of 2 seconds, and a cooling time of 20 seconds. Each test specimen was molded by injection molding to form an ISO type A test specimen, and a test specimen of length 80 mm, width 10 mm and thickness 4 mm prescribed in ISO 316 was then cut from this ISO type A test specimen. The flexural strength and flexural modulus of this test specimen were then measured in accordance with ISO 178 in an atmosphere at a temperature of 23°C, under conditions including a span between supports of 64 mm, and a test speed of 2 mm/minute.

Further, with the exception of using a universal testing machine (68TM-50, manufactured by Instron Inc.) set to a temperature of 120°C, the same procedure as the flexural strength measurement described above was used to measure the high-temperature flexural strength in accordance with ISO 178/1A.

### [Temperature of Deflection Under Load]

Using the resin compositions obtained in Examples, Reference Example and Comparative Examples as molding materials, test specimens were obtained using an injection molding machine (hydraulic horizontal molding machine, model PS40E5ASE, manufactured by Nissei Plastic Industrial Co., Ltd.), under injection conditions including a molding temperature of 330°C, a die temperature of 120°C, an injection pressure of 100 MPa, an injection time of 2 seconds, and a cooling time of 20 seconds. Each test specimen was molded by injection molding to form an ISO type A test specimen, and a test specimen of length 80 mm, width 10 mm and thickness 4 mm prescribed in ISO 316 was then cut from this ISO type A test specimen. The temperature of deflection under load for the test specimen was measured in accordance with ISO 75, under conditions including a load of 1.80 MPa, a span between supports of 64 mm, a rate of temperature increase of 2°C/minute, and a prescribed deflection amount of 0.32 mm.

### [Polyamide Melt Mass Flow Rate (MFR)]

Using an MFR measurement apparatus (Melt Indexer G-01, manufactured by Toyo Seiki Seisaku-sho, Ltd.), the MFR of each polyamide was measured in accordance with JIS K7210, under conditions including a test temperature of 320°C and a load of 2,160 g.

### <<Production of Resin Compositions>>

### <Raw Materials>

### - Base resin: Polyamide

P-1: (a semi-aromatic polyamide having a structural unit represented by general formula (1) shown above in which Ar¹ represents a 1,4-phenylene group and p is 10, MFR: 57 g/lOmin)
P-2: (a semi-aromatic polyamide having a structural unit represented by general formula (1) shown above in which Ar¹ represents a 1,4-phenylene group and p is 10, MFR: 7 g/lOmin)
P-3: (N1000 manufactured by Kuraray Co., Ltd., a semi-aromatic polyamide having a structural unit represented by general formula (1) shown above in which Ar¹ represents a 1,4-phenylene group and p is 9)
P-4: (1013B manufactured by UBE Corporation, an aliphatic polyamide)

### - Colorant: Carbon Black

Acetylene black (Denka Black granules manufactured by Denka Co., Ltd., mean particle size of primary particles: 35 nm, DBP oil absorption: 212 mg/100g, specific surface area: 65 to 70 m²/g)
Furnace black (Mitsubishi Carbon Black #960, an oil furnace-type carbon black manufactured by Mitsubishi Chemical Corporation, mean particle size of primary particles: 16 nm, DBP oil absorption: 69 mg/100g)

### - Modifier: Modified Polyolefin

MH7020 (a maleic anhydride-modified ethylene-butene copolymer, manufactured by Mitsui Chemicals Co., Ltd.)

### [Examples 1 to 8, Reference Example 1, Comparative Examples 1 to 6]

Using the blend amounts (parts by mass) shown in Tables 1 and 2, the base polymers, carbon blacks and modified polyolefin were subjected to melt kneading in a twin-screw extruder while degassing was conducted, the resulting mixture was discharged in a strand-like form through a circular nozzle (discharge port), and a strand cutter was then used to pelletize the discharged strand, thus yielding pelletized resin compositions of the Examples, the Reference Example and the Comparative Examples.

The results of the above measurements are also shown in Tables 1 and 2.

**[Table 1]**

| | | Units | Comparative Example 1 | Comparative Example 2 | Example 1 | Example 2 | Example 3 | Example 4 | Comparative Example 3 | Example 5 | Comparative Example 4 | Comparative Example 5 |
|---|---|---|---|---|---|---|---|---|---|---|---|---|
| Base polymer | Polyamide | | Semi-aromatic polyamide | | | | | | Semi-aromatic polyamide | | Aliphatic polyamide | |
| | | | P-1 | P-1 | P-1 | P-1 | P-1 | P-1 | P-2 | P-2 | P-4 | P-4 |
| | | parts by mass | 100 | 100 | 100 | 100 | 100 | 100 | 100 | 100 | 100 | 100 |
| Colorant: carbon black | Acetylene black | parts by mass | | | 1.0 | 5.3 | 11.1 | 17.6 | | 1.0 | | 1.0 |
| | Furnace black | parts by mass | | 1.0 | | | | | | | | |
| Flexural strength (23°C) | | MPa | 112 | 110 | 109 | 100 | 101 | 106 | 121 | 128 | 112 | 112 |
| Flexural modulus (23°C) | | MPa | 2900 | 2900 | 3038 | 3189 | 3479 | 3683 | 2260 | 2866 | 3058 | 3009 |
| Temperature of deflection under load | | °C | 157 | 155 | 176 | 183 | 183 | 188 | 142 | 156 | 64 | 65 |
| High-temperature flexural strength (120°C) | | MPa | 43 | 40 | 48 | 53 | 57 | 60 | 45 | 51 | 23 | 23 |

**[Table 2]**

| | | Units | Comparative Example 6 | Example 6 | Example 7 | Reference Example 1 | Example 8 |
|---|---|---|---|---|---|---|---|
| Base polymer | Polyamide | | Semi-aromatic polyamide | | | Semi-aromatic polyamide | |
| | | | P-3 | P-3 | P-3 | P-1 | P-1 |
| | | parts by mass | 100 | 100 | 100 | 100 | 100 |
| Colorant: carbon black | Acetylene black | parts by mass | | 1.0 | 5.3 | | 1.0 |
| | Furnace black | parts by mass | | | | | |
| Modified polyolefin | MH7020 | parts by mass | | | | 3.1 | 3.1 |
| Flexural strength (23°C) | | MPa | 129 | 131 | 123 | 107 | 111 |
| Flexural modulus (23°C) | | MPa | 2290 | 2370 | 2490 | 2600 | 2600 |
| Temperature of deflection under load | | °C | 120 | 124 | 126 | 150 | 166 |
| High-temperature flexural strength (120°C) | | MPa | 40 | 41 | 45 | 40 | 47 |

Comparison of Examples 1 to 4, in which acetylene black was added as the carbon black to the base polymer (P-1), with Comparative Example 1 which contained no added carbon black revealed that the flexural modulus, the temperature of deflection under load, and the high-temperature flexural strength all improved for the compositions of Examples 1 to 4 compared with Comparative Example 1.

Referring to Examples 1 to 4, it is evident that as the blend amount of the acetylene black relative to the semi-aromatic polyamide is increased, the flexural modulus, the temperature of deflection under load, and the high-temperature flexural strength all tend to improve further.

On the other hand, in Comparative Example 2, in which furnace black was used instead of acetylene black as the carbon black, none of the aforementioned improvements in the flexural modulus, the temperature of deflection under load, or the high-temperature flexural strength could be confirmed.

Further, considering those cases where the aliphatic polyamide P-4 was used instead of the semi-aromatic polyamide as the base polymer, comparison of Comparative Example 4 which contained no added carbon black and Comparative Example 5 in which acetylene black was added as the carbon black revealed that despite the addition of acetylene black as the carbon black in Comparative Example 5, no improvements in the flexural modulus, the temperature of deflection under load, or the high-temperature flexural strength could be confirmed.

Accordingly, this indicates that it is the combination of the acetylene black and the semi-aromatic polyamide that enables improvements in the flexural modulus, the temperature of deflection under load, and the high-temperature flexural strength of the resin composition.

In terms of the flexural strength at normal temperature (23°C), no improvement could be confirmed as a result of the addition of acetylene black (Tables 1 and 2).

This indicates that the improvements in the temperature of deflection under load and the high-temperature flexural strength achieved with the combination of the acetylene black and the semi-aromatic polyamide manifested particularly strongly under high-temperature conditions.

The aforementioned effects achieved by the addition of acetylene black manifested in a similar manner even when the variety of the semi-aromatic polyamide was changed.

Comparison of Comparative Example 3 and Example 5, which both used the base polymer (P-2), confirmed that in Example 5, the addition of the acetylene black yielded improvements in the flexural modulus, the temperature of deflection under load, and the high-temperature flexural strength.

Furthermore, comparison of Comparative Example 6 and Examples 6 and 7, all of which used the base polymer (P-3), confirmed that in Examples 6 and 7, the addition of the acetylene black yielded improvements in the flexural modulus, the temperature of deflection under load, and the high-temperature flexural strength.

Further, in a similar manner, reference to Reference Example 1 and Example 8, in which an acid-modified polyolefin was added as a modifier, confirmed that in Example 8, the addition of the acetylene black yielded improvements in the temperature of deflection under load, and the high-temperature flexural strength.

P-1 and P-2 represent materials which, even amongst semi-aromatic polyamides, exhibit superior heat resistance. The above results indicated that by adding acetylene black to P-1 and P-2, molded bodies having even more superior heat resistance could be obtained.

The various compositions and combinations and the like described in each of the embodiments are merely examples, and additions, omissions, substitutions and other changes to these compositions are possible without departing from the scope of the present invention. Further, the present invention is in no way limited by the various embodiments, and is limited only by the scope of the claims.

## Claims

1. A resin composition comprising a semi-aromatic polyamide and acetylene black.

2. The resin composition according to Claim 1, wherein an amount of the acetylene black is 0.5 parts by mass or more but 20.0 parts by mass or less per 100 parts by mass of the semi-aromatic polyamide.

3. The resin composition according to Claim 1 or 2, wherein the semi-aromatic polyamide has a structural unit represented by general formula (1) shown below: 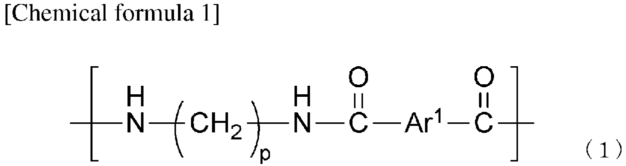 [wherein in formula (1), Ar¹ represents a phenylene group or a naphthylene group, a plurality of Ar¹ groups may be the same or different from each other, and p represents an integer of 6 to 11].

4. The resin composition according to Claim 3, wherein the semi-aromatic polyamide has a structural unit of the formula (1) in which Ar¹ represents a 1,4-phenylene group and p is 10.

5. The resin composition according to Claim 1 or 2, wherein when a molded body of length 80 mm, width 10 mm and thickness 4 mm, molded using an injection molding machine using the resin composition as a molding material, under molding conditions including a molding temperature of 330°C, a die temperature of 120°C and an injection time of 2 seconds, is used as a test specimen and tested in accordance with ISO 75, a temperature of deflection under load for the test specimen, measured under a load of 1.80 MPa, a span between supports of 64 mm, a rate of temperature increase of 2°C/minute, and a prescribed deflection amount of 0.32 mm, is 160°C or higher.

6. The resin composition according to Claim 1 or 2, wherein an amount of the semi-aromatic polyamide relative to 100% by mass of a total mass of the resin composition is 50% by mass or higher.

7. A molded body molded from the resin composition according to Claim 1 or 2.

8. A method for producing the resin composition according to Claim 1 or 2, the method comprising mixing the semi-aromatic polyamide and the acetylene black.

9. The method for producing a resin composition according to Claim 8, wherein a blend amount of the acetylene black is 1.0 parts by mass or more but 20.0 parts by mass or less per 100 parts by mass of the semi-aromatic polyamide.
